# EUROPEAN PATENT SPECIFICATION

(11) **EP 4 456 296 B1**
(45) Date of publication and mention of the grant of the patent: **09.09.2026**
(21) Application number: 23799628.5
(22) Date of filing: 27.04.2023
(51) Int. Cl.: A62C 3/16, H01M 50/204, H01M 10/613, H01M 10/32, H01M 50/691

(54) **BATTERY RACK HAVING A DRAINAGE STRUCTURE AND ENERGY STORAGE SYSTEM INCLUDING THE SAME**
BATTERIEGESTELL MIT DRAINAGESTRUKTUR UND ENERGIESPEICHERSYSTEM DAMIT
BÂTI DE BATTERIE AYANT UNE STRUCTURE DE DRAINAGE ET SYSTÈME DE STOCKAGE D'ÉNERGIE LE COMPRENANT

(30) Priority: 02.05.2022 KR 20220054389
(43) Date of publication of application: 30.10.2024
(73) Proprietor: LG Energy Solution, Ltd., Seoul 07335 (KR)
(72) Inventor: KIM, Ji-Hun, Daejeon 34122 (KR); KIM, Yo-Hwan, Daejeon 34122 (KR); PARK, Hong-Jae, Daejeon 34122 (KR); YANG, Mun-Seok, Daejeon 34122 (KR); YOON, Sung-Han, Daejeon 34122 (KR); LEE, Seung-Jun, Daejeon 34122 (KR); LEE, Ji-Won, Daejeon 34122 (KR); LEE, Hyun-Min, Daejeon 34122 (KR); LEE, Hyung-Uk, Daejeon 34122 (KR); CHO, Tae-Shin, Daejeon 34122 (KR)
(74) Representative: Plasseraud IP
(86) International application number: PCT/KR2023/005827
(87) International publication number: WO 2023/214745

(56) References cited:
- EP-A1- 3 968 446
- WO-A1-2021/177762
- CN-A- 104 001 297
- JP-A- 2013 065 419
- KR-A- 20210 004 189
- KR-A- 20210 112 163
- KR-Y1- 200 482 382
- US-A1- 2023 040 296

## Description

### TECHNICAL FIELD

The present disclosure relates to a battery rack and an energy storage system including the same, and more particularly, to a battery rack with a drainage structure for preventing a fire fighting water fed into a battery module in which a thermal event occurred from entering other adjacent battery modules and an energy storage system including the same.

### BACKGROUND ART

Secondary batteries widely used at present include lithium ion batteries, lithium polymer batteries, nickel cadmium batteries, nickel hydrogen batteries, nickel zinc batteries or the like. Among them, lithium secondary batteries have little or no memory effect, and thus they are gaining more attention than nickel-based secondary batteries for their advantages that recharging can be done whenever it is convenient, the self-discharge rate is very low and the energy density is high.

In general, lithium secondary batteries may be classified into can type secondary batteries in which an electrode assembly is included in a metal can and pouch type secondary batteries in which an electrode assembly is included in a pouch of an aluminum laminate sheet according to the shape of outer packaging.

A secondary battery may be used alone, but in general, since the voltage of a secondary battery is about 2.5V to 4.5V, when a higher output voltage is required, a plurality of secondary batteries may be connected in series and/or in parallel to form a battery module. Additionally, a battery module may be used alone, or two or more battery modules may be electrically connected in series and/or in parallel to form a device of higher level such as a battery rack or a battery pack.

Recently, with the rising issues such as energy shortage or eco-friendly energy, attention is paid to an energy storage system including a plurality of battery racks to store power during off-peak hours and use the stored power during peak hours.

In an example, an industrial energy storage system includes battery racks, each including a rack case and a plurality of battery modules which is received in the rack case along the vertical direction, and a container accommodating the battery racks, an air conditioning device for managing the temperature of the battery racks and a fire extinguishing device for fire prevention or the like.

More recently, as the fire safety measures of the energy storage system, a fire extinguishing system is introduced into the energy storage system, the fire extinguishing system designed to, in the event of thermal runaway of battery cells in a specific battery module mounted in a battery rack, feed a fire fighting water into the specific battery module before heat propagation to the other battery modules in order to suppress the fire.

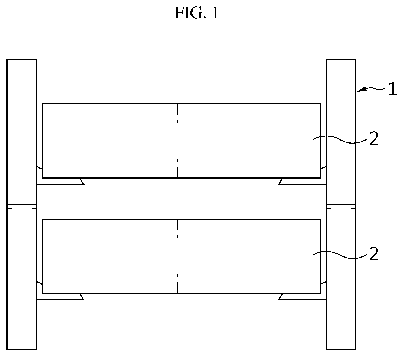

However, as shown in FIG. 1, the conventional battery rack includes the rack case in the shape of a frame with open upper, lower, left and right sides and battery modules stacked in multistep arrangement in the rack case without a proper drainage structure, and thus after the fire fighting water is fed into the battery module by the fire extinguishing system, when leakage of the fire fighting water occurs in the corresponding battery module, the fire fighting water may easily enter the other adjacent battery module. In this case, the other adjacent battery modules may suffer flood damage, causing loss, for example, even normal battery modules may spoil.

Document WO 2021/177762 A1 discusses a battery rack for effectively preventing the spread of a fire or heat and re-using an undamaged battery pack when the fire or thermal runaway occurs while in use. Document EP 3 968 446 A1 relates to a battery rack and an energy storage system including the battery rack.

### DISCLOSURE

### Technical Problem

The present disclosure is designed to solve the above-described problem, and therefore the present disclosure is directed to providing a battery rack having a drainage structure for preventing a fire fighting water fed into a battery module in which a thermal event occurred from entering other adjacent battery modules and an energy storage system including the same.

The technical problem to be solved by the present disclosure is not limited to the above-described problems, and these and other problems will be clearly understood by those skilled in the art from the following description.

### Technical Solution

To achieve the above-described objective, a battery rack according to claim 1 is proposed.

The drain guide unit may be coupled to the outer surface of the rack case at a location which is lower than an upper battery module of every two battery modules vertically adjacent to each other and higher than a lower battery module.

The drain guide unit may be configured to cover the receiving portion located on the drain guide unit when it is rotated upwards.

The drain guide unit may be configured to open the receiving portion located on the drain guide unit when it is rotated downwards.

The drain guide unit may include a drain guide plate of a plate shape hinged to the outer surface of the rack case; and a stopper configured to limit rotation of the drain guide plate so that the drain guide plate is at a preset angle with respect to the outer surface of the rack case.

The stopper may be in a shape of a protrusion which protrudes from an edge area of the drain guide plate close to a rotation axis so as to come in contact with the outer surface of the rack case at the preset angle.

The drain guide unit may further include a magnet at an edge area opposite a rotation axis of the drain guide plate, to allow the drain guide plate rotated upwards to be fixed in parallel to the outer surface of the rack case.

The drain guide unit may include a first drain guide unit disposed on a front outer surface of the rack case; and a second drain guide unit disposed on a rear outer surface of the rack case.

In the rack case, the receiving portion may have a narrower horizontal width of a rear open end than a front open side, and the fire fighting water supply pipe may be connected to each battery module through the rear outer surface of the rack case.

The first drain guide unit may be provided in a size to cover a front open end of each receiving portion, and the second drain guide unit may be provided in a size to cover a rear open end of each receiving portion.

The battery module may include a fan in a front surface of a module housing and an air conditioning hole in a rear surface of the module housing, and may be inserted into the receiving portion through the rear open end of the receiving portion such that the air conditioning hole is exposed.

When the battery module is inserted into the receiving portion, a portion of the rear surface of the module housing below the air conditioning hole may be closed by the rear outer surface of the rack case.

According to another aspect of the present disclosure, there may be provided an energy storage system including at least one battery rack described above.

### Advantageous Effects

According to the present disclosure, it may be possible to prevent the fire fighting water fed into any battery module of the battery rack in which a thermal event occurred from entering the other adjacent battery modules in the event of overflow and leakage of the fire fighting water. Accordingly, when the fire fighting water is fed into the battery rack, the other battery modules except the battery module in which the thermal event occurred may avoid flood damage.

The effect of the present disclosure is not limited to the above-described effects, and these and other effects will be clearly understood by those skilled in the art from this disclosure and the accompanying drawings.

### DESCRIPTION OF DRAWINGS

FIG. 1 is a diagram schematically showing an area of a battery rack according to a related art.
FIG. 2 is a perspective view schematically showing a battery rack according to an embodiment of the present disclosure before insertion of a battery module.
FIG. 3 is a perspective view schematically showing a battery rack according to an embodiment of the present disclosure after insertion of a battery module.
FIG. 4 is a front view of the battery rack of FIG. 3.
FIG. 5 is a rear view of the battery rack of FIG. 3.
FIG. 6 is a side view of the battery rack of FIG. 3.
FIG. 7 is a diagram showing a rear side of a battery module having an air conditioning hole and a feed valve according to an embodiment of the present disclosure.
FIG. 8 is a partial cross-sectional view of the battery module of FIG. 7.
FIG. 9 is a schematic cross-sectional view of the battery module of FIG. 7.
FIG. 10 is a diagram illustrating an example of feeding and drainage of a fire fighting water into/from a battery rack according to an embodiment of the present disclosure.
FIG. 11 is a diagram schematically showing an energy storage system according to an embodiment of the present disclosure.

### BEST MODE

Hereinafter, exemplary embodiments of the present disclosure will be described in detail with reference to the accompanying drawings.

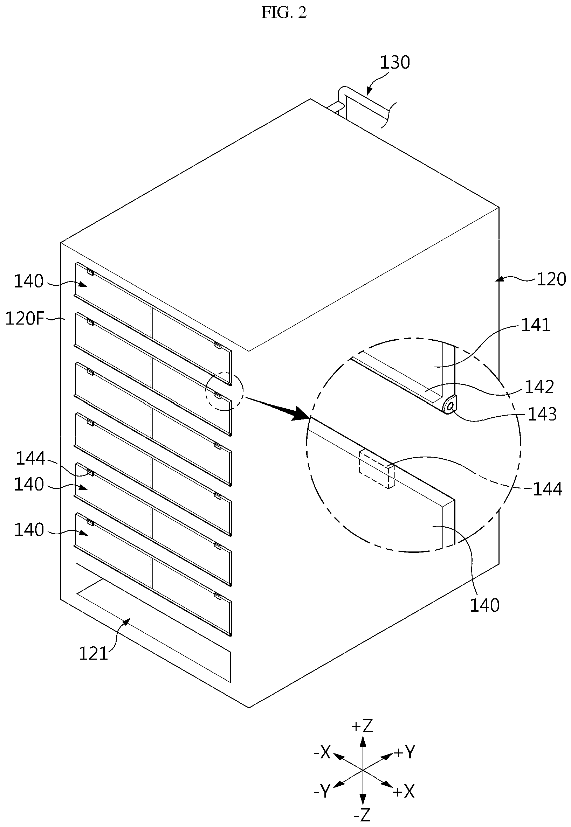

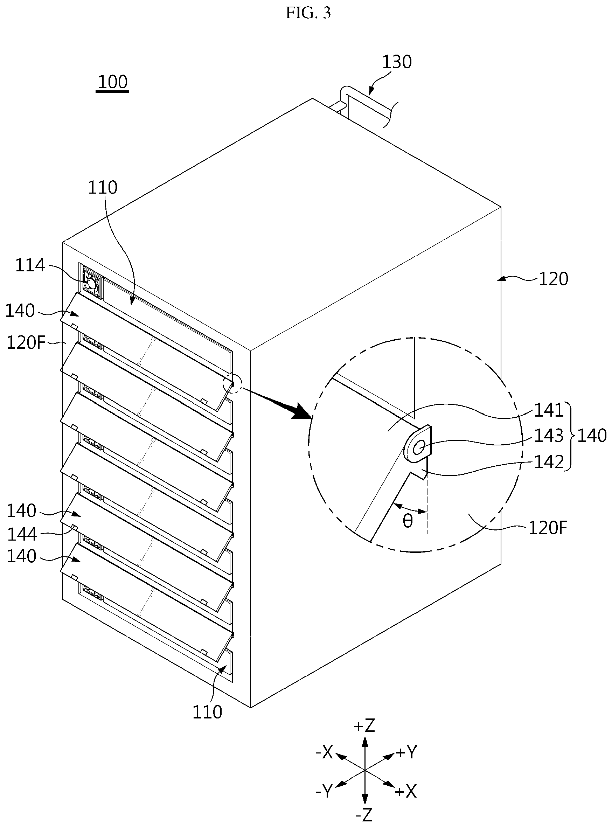

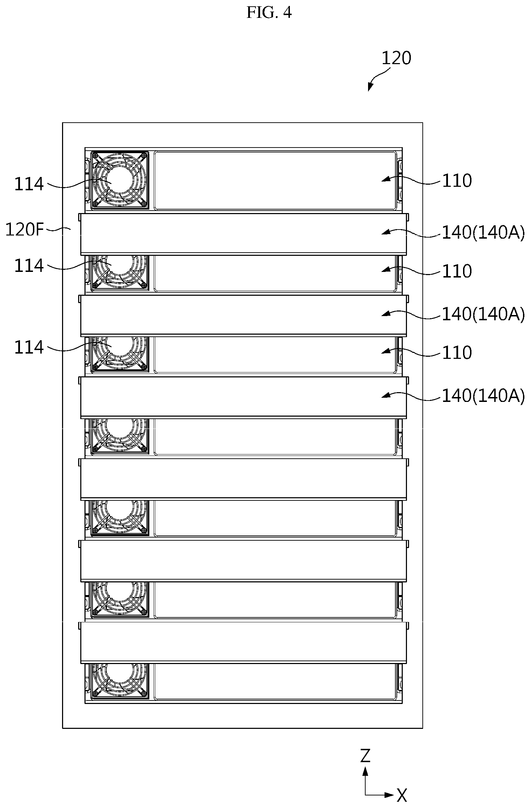

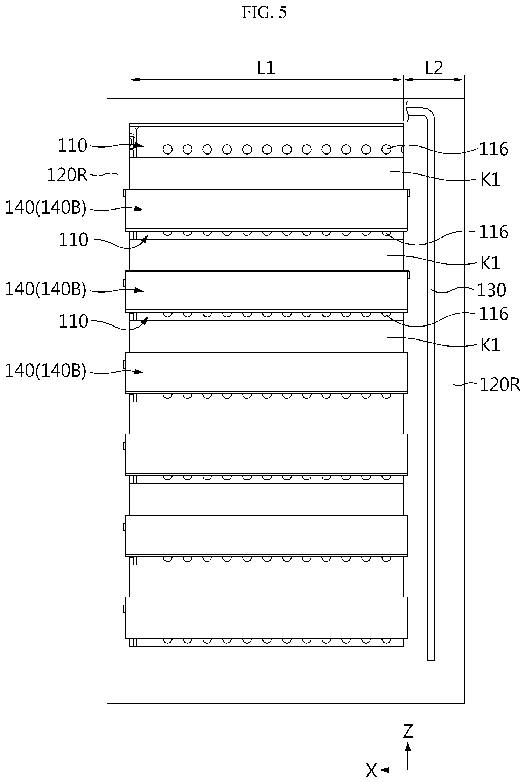

FIG. 2 is a perspective view schematically showing a battery rack according to an embodiment of the present disclosure before insertion of a battery module, FIG. 3 is a perspective view schematically showing the battery rack according to an embodiment of the present disclosure after insertion of a battery module, FIG. 4 is a front view of the battery rack of FIG. 3, and FIG. 5 is a rear view of the battery rack of FIG. 3.

Referring to FIGS. 2 to 5, the battery rack 100 according to an embodiment of the present disclosure may include a plurality of battery modules 110, a rack case 120, a fire fighting water supply pipe 130 and a drain guide unit 140.

Each battery module 110 may include secondary batteries 111 and a module housing 112 accommodating the secondary batteries 111 and may be configured to store and release electrical energy. Here, the secondary batteries 111 may be connected in series and/or in parallel within the module housing 112 according to the required capacity and output for the battery module 110.

Additionally, each battery module 110 may include a cooling fan 114 and an air conditioning hole 116 to dissipate heat generated during charging/discharging. For example, the cooling fan 114 may be disposed in the front surface portion of the module housing 112 and the air conditioning hole 116 may be disposed in the rear surface portion of the module housing 112. When the cooling fan 114 operates, after the outside air enters the battery module 110 through the air conditioning hole 116 in the rear surface portion of the battery module 110 and absorbs heat of the secondary batteries 111, the air may be forced out through the cooling fan 114 in the front surface portion of the battery module 110. On the contrary to this embodiment, the cooling fan 114 may be disposed in the rear surface of the battery module 110 and the air conditioning hole 116 may be disposed in the front surface of the battery module 110.

Additionally, each battery module 110 may be configured to directly feed the fire fighting water into the module housing 112 in case of a situation in which a thermal event such as thermal runaway, fire, explosion or the like occurs in the secondary battery 111 during charging/discharging. For example, the fire fighting water supply pipe 130 is connected to the rear surface of each battery module 110, and when a thermal event occurs, the fire fighting water may be fed into the corresponding battery module 110. Its detailed description will be provided below.

As shown in FIG. 3, the rack case 120 may be approximately cuboidal in shape to insert and receive each of the plurality of battery modules 110 at each predetermined height. Additionally, the rack case 120 may be made of a stiff material, preferably, a metallic or non-metallic material having high mechanical strength to protect the battery modules 110 from impacts or vibration.

In particular, the rack case 120 according to the present disclosure may include a plurality of receiving portions 121 along the vertical direction and may be configured to receive each battery module 110 in each receiving portion 121. Each receiving portion 121 may have a structure in which the upper, lower, left and right sides (+Z,-Z,-X,+X) are closed except the front side (-Y) and the rear side (+Y). That is, as opposed to the conventional rack case 1 (see FIG. 1) having a structure in which front, rear, upper, lower, left and right sides are open, the rack case 120 according to the present disclosure has a structure in which upper, lower, left and right sides are closed.

In the case of the rack case 1 having the open upper, lower, left and right sides as shown in FIG. 1 as described in the background part of the specification, when the fire fighting water is fed into the specific battery module 2, in case where leakage of the fire fighting water occurs in the battery module 2, the battery modules 2 located below the corresponding battery module 2 may suffer flood damage. To solve this problem, the rack case 120 according to the present disclosure may be configured such that the upper, lower, left and right sides of each receiving portion 121 are closed and the front and rear sides are open to prevent flood damage of the other battery modules 110 and guide the drainage of the fire fighting water in the frontward or rearward direction when suppressing fire using the fire fighting water.

Additionally, the drain guide unit 140 may be disposed on at least one side of the front outer surface or the rear outer surface of the rack case 120 to cause the fire fighting water to be dropped down to a location spaced a predetermined distance apart from the outer surface of the rack case 120 when the fire fighting water coming out of the battery module 110 moves to the front side or rear side of the rack case 120 and falls out of the rack case 120.

As shown in FIG. 3, the drain guide unit 140 may protrude from the outer surface of the rack case 120 with inclination of a predetermined angle so that the predetermined angle is formed between the plate surface the drain guide unit 140 and the outer surface of the rack case. For example, the drain guide unit 140 may protrude outwards with inclination of the predetermined angle on the basis of the outer surface of the rack case 120 perpendicular to the ground, and may act as eaves to protect and cover the battery module 110 in the underlying receiving portion 121 from the fire fighting water falling down from above. Additionally, the drain guide unit 140 may play a role in preventing venting gas to flames from the battery module 110 from spreading to the battery module 110 located on or below in the event of a fire in the battery module 110.

Specifically, as shown in FIGS. 3 and 4, the drain guide unit 140 may be coupled to the outer surface of the rack case 120 at a location that is lower than the upper battery module 110 of every two battery modules 110 vertically adjacent to each other and higher than the lower battery module 110. That is, the plurality of drain guide units 140 may be arranged along the vertical direction, and may be coupled to the outer surface of the rack case 120 at each height between the upper battery module 110 and the lower battery module 110. For example, in this embodiment, the battery rack 100 includes seven battery modules 110 stacked in the vertical direction, and in this case, six drain guide units 140 may be coupled to the front outer surface 120F of the rack case 120, and another six drain guide units 140 may be coupled to the rear outer surface 120R of the rack case 120. Then, when the fire fighting water is fed in response to a thermal event in any of the seven battery modules 110, the other battery modules 110 except the corresponding battery module 110 may avoid flood damage caused by the fire fighting water.

Referring to FIG. 3, seeing the front surface portion of the rack case 120, the drain guide unit 140 is configured to partially cover the front side of a front open end of the underlying receiving portion 121. In this case, when the battery module 110 while placed in horizontal condition is directly inserted into the receiving portion 121, the battery module 110 cannot be inserted into the receiving portion 121 due to interference with the drain guide unit 140. Unlike this embodiment, the eaves of the drain guide unit 140 may be short in length to avoid interference with the drain guide unit 140 when inserting the battery module 110 into the receiving portion 121. However, in this embodiment, the eaves of the drain guide unit 140 is long in length to drain the fire fighting water by the drain guide unit 140 more effectively.

In this case, to overcome the difficult when inserting the battery module 110 into the receiving portion 121, the battery rack 100 according to this embodiment includes the drain guide unit 140 of rotatable type.

Additionally, as shown in FIG. 2, before inserting the battery module 110 into the receiving portion 121 of the rack case 120, the drain guide unit 140 may be rotated and attached to the outer surface of the rack case 120.

The drain guide unit 140 is configured to rotate in the upward direction to cover the receiving portion 121 located on the corresponding drain guide unit 140. On the contrary, the drain guide unit 140 may be configured to rotate in the downward direction to open the receiving portion 121 located on the corresponding drain guide unit 140. In this instance, the grain guide unit 140 rotated in the downward direction may act as eaves for the underlying receiving portion 121 as shown in FIG. 3.

By the above-described configuration, when receiving the battery module 110 in the rack case 120, for example, as shown in FIG. 2, the battery module 110 is inserted into the bottommost receiving portion 121 of the rack case 120, and the drain guide unit 140 located immediately on the bottommost receiving portion 121 is rotated in the downward direction by the predetermined angle. In this instance, the second receiving portion 121 of the rack case 120 from the bottom is open. The battery module 110 is inserted into the open second receiving portion 121. In this pattern, the battery modules 110 are inserted in a sequential order from the bottommost receiving portion 121 of the rack case 120 to the topmost receiving portion 121. Then, the battery modules 110 are received in the rack case 120, and as shown in FIG. 3, each drain guide unit 140 protrudes from the outer surface of the rack case 120 at the predetermined angle between the drain guide unit 140 and the outer surface of the rack case 120.

The drain guide unit 140 may include a drain guide plate 141 and a stopper 142.

The drain guide plate 141 may be in the shape of a plate that is hinged 143 to the outer surface of the rack case 120. The drain guide plate 141 may be provided in a size to cover the receiving portion 121 located on the drain guide plate 141 when it is rotated upwards and attached to the outer surface of the rack case 120 and may be made of any stiff material, for example, plastics or metals. Additionally, the drain guide plate 141 may have a magnet 144 in the opposite edge area to the hinged 143 edge area as shown in the enlarged diagram of FIG. 2. The magnet 144 may be used to rotate the drain guide plate 141 upwards and fix it to the outer surface of the rack case 120.

Additionally, as shown in FIG. 3, the drain guide unit 140 has a structure in which the stopper 142 is incorporated into the drain guide plate 141 so that when the drain guide plate 141 rotates in the downward direction (-Z direction), the rotation may stop at the predetermined angle.

That is, when the drain guide plate 141 is at the preset angle θ with respect to the outer surface of the rack case 120, one surface of the stopper 142 comes into contact with the outer surface of the rack case, thereby limiting the rotation of the drain guide plate 141. Here, the preset angle θ may be, for example, determined in a range between 30° and 60°. Accordingly, the drain guide unit 140 may act as eaves for the underlying receiving portion 121.

In the case of this embodiment, the stopper 142 may be in the shape of a protrusion that protrudes from the edge area of the drain guide plate 141 close to the rotation axis so as to contact the outer surface of the rack case 120 at the preset angle θ as shown in the enlarged section of FIG. 3.

The protrusion may be preferably in the shape of an approximately right-angled triangle in cross section and extended to a length corresponding to the horizontal (±X direction) width of the drain guide plate 141. By the stopper 142, the drain guide plate 141 rotates in the downward direction, and stops when the hypotenuse of the right-angled triangle comes into contact with the outer surface of the rack case 120. Accordingly, the drain guide plate 141 may form the eave structure that protrudes with inclination of the preset angle with respect to the outer surface of the rack case 120.

Meanwhile, the drain guide unit 140 according to this embodiment includes a first drain guide unit 140A on the front outer surface 120F of the rack case 120 as shown in FIG. 4, and a second drain guide unit 140B on the rear outer surface 120R of the rack case 120 as shown in FIG. 5.

The first drain guide unit 140A may be provided in a size to cover the front open end of each receiving portion 121, and the second drain guide unit 140B may be provided in a size to cover the rear open end of each receiving portion 121. For example, as described above, the first drain guide unit 140A may be provided in a size to cover the front open end of the receiving portion 121 when the first drain guide unit 140A is rotated in the upward direction (+Z direction) and attached to the front outer surface of the rack case 120 as shown in FIG. 2, and likewise, the second drain guide unit 140B may be provided in a size to cover the rear open end of the receiving portion 121 when the second drain guide unit 140B is rotated in the upward direction (+Z direction) and attached to the rear outer surface of the rack case 120.

That is, as shown in FIGS. 4 and 5, when the size of the front open end of the receiving portion 121 and the size of the rear open end are different, the size of the first drain guide unit 140A and the size of the second drain guide unit 140B corresponding to them may be different.

In particular, in this embodiment, each receiving portion 121 of the rack case 120 has the narrower horizontal width (±X direction) of the rear open end than the horizontal width of the front open end. In other words, as shown in FIG. 5, the horizontal width of the rear open end of the receiving portion 121 has a width as much as 'L1'. This is to place the fire fighting water supply pipe 130 and the second drain guide unit 140B in the rear outer surface 120R of the rack case 120 without interference. That is, the fire fighting water supply pipe 130 may be disposed in the remaining portion as much as 'L2' in FIG. 5 to avoid interference with the second drain guide unit 140B.

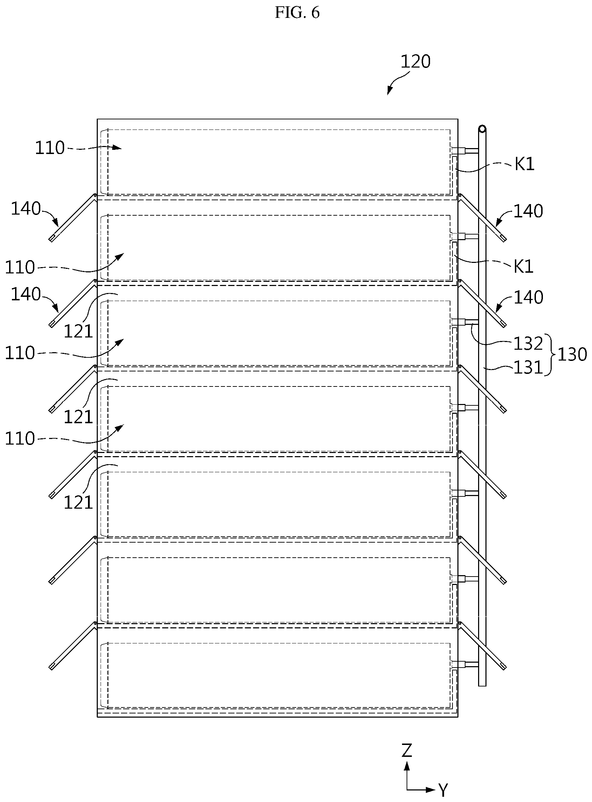

The fire fighting water supply pipe 130 is configured to supply the fire fighting water to each battery module 110 in case of emergency, and may be configured to pass through the rear outer surface of the rack case 120 and connect to the battery module 110 disposed in the receiving portion 121. For example, as shown in FIG. 6, the fire fighting water supply pipe 130 may include a main pipe 131 disposed in the vertical direction with respect to the rack case 120 and a plurality of connection nozzles 132 branching off from the main pipe 131 perpendicularly to the main pipe 131, and each connection nozzle 132 may be connected to a feed valve 117 disposed in the rear surface of the battery module 110 through the rear outer surface of the rack case 120. For reference, each connection nozzle 132 may be inserted into the rack case 120 through a through-hole (not shown) formed in the rear outer surface of the rack case 120.

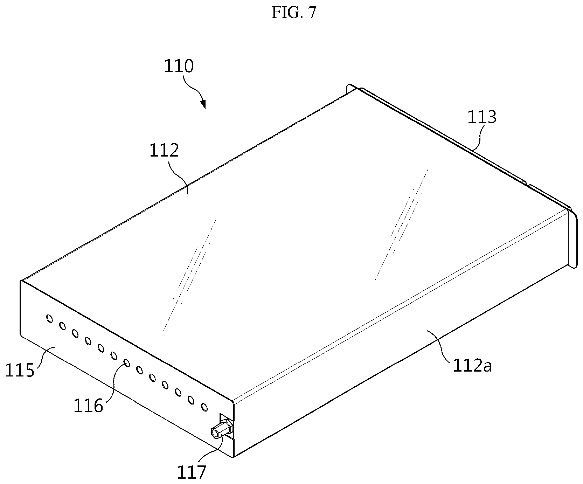

Subsequently, the configuration of the battery module 110 for feeding the fire fighting water into the battery module 110 in the event of thermal runaway or fire in the secondary batteries 111 will be described with reference to FIGS. 7 to 9.

As described above, the battery module 110 may include the module housing 112, the secondary batteries 111 received in the module housing 112, the air conditioning hole 116 and the feed valve 117 in the rear surface of the module housing 112 and the cooling fan 114 in the front surface of the module housing 112.

Accordingly, when the battery module 110 is inserted into the receiving portion 121 of the rack case 120, the cooling fan 114 may be disposed on the front side of the rack case 120 and the air conditioning hole 116 and the feed valve 117 may be disposed on the rear side of the rack case 120. When the battery module 110 is inserted and disposed in the receiving portion 121 of the rack case 120, the lower part of the air conditioning hole 116 may be closed by the rear outer surface of the rack case 120. That is, as indicated by 'K1' in FIGS. 5 and 6, the rack case 120 may have a wall that protrudes from the bottom surface of each receiving portion 121 at the rear open end of each receiving portion 121. The wall plays a role in preventing the fire fighting water from leaking through the rear side of the receiving portion 121.

The module housing 112 may be in the shape of an approximately cuboidal box having an internal space for receiving a cell stack formed by stacking the secondary batteries 111 in one direction, and including a bottom plate, a top plate, left and right side plates 112a, a front plate 113 and a rear plate 115. Here, the six plates may be assemblable and disassemblable, but may be partially assemblable and disassemblable by integrally fabricating some of the six plates and individually fabricating the remaining plates.

For the secondary battery 111, a pouch type secondary battery 111 may be used. The plurality of pouch type secondary batteries 111 is stacked in one direction to form the cell stack, and the cell stack is received in the module housing 112.

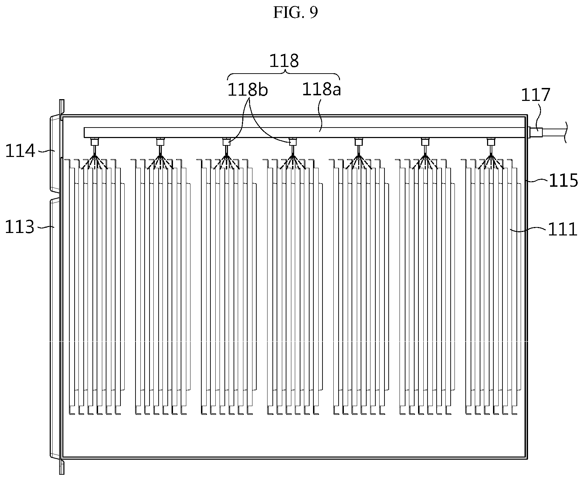

The cell stack may be disposed in the module housing 112 such that the lengthwise direction of the pouch type secondary batteries 111 is perpendicular to the side plates 112a of the module housing 112. In other words, as shown in FIG. 9, when each direction perpendicular to the stack direction of the secondary batteries 111 is defined as a front surface direction and a rear surface direction of the cell stack, the cell stack may have the front surface portion and the rear surface portion facing the left and right side plates 112a at a predetermined gap between them respectively. As described above, when the cell stack is disposed in the module housing 112, the module housing 112 may have an air flow space and a space for placing a fire extinguishing unit 118.

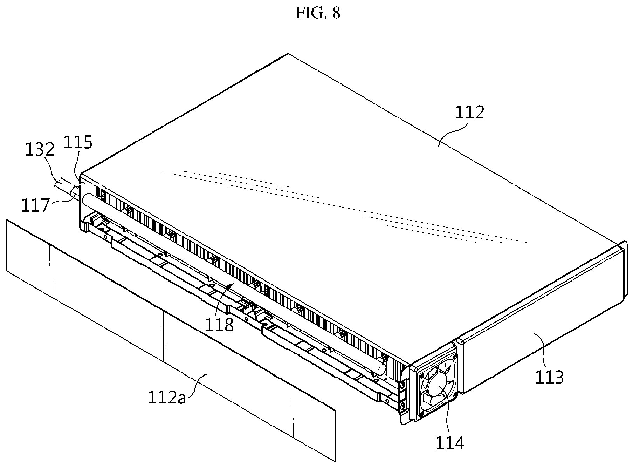

The fire extinguishing unit 118 may include a pipe shaped unit body 118a and a plurality of spray nozzles 118b as shown in FIGS. 8 and 9.

The unit body 118a may be in the shape of a pipe having one end connected to the feed valve 117 and extended along the lengthwise direction of the module housing 112. Additionally, the plurality of spray nozzles 118b may be arranged at a predetermined interval along the lengthwise direction of the unit body 118a and may have outlets facing the cell stack.

Although not shown in detail, each spray nozzle 118b may include a glass bulb (not shown) configured to close the outlet through which jets of fire fighting water will be emitted in normal situation and open the outlet when thermal damage occurs. The glass bulb may be configured to receive a predetermined liquid or gas therein and break by volume expansion of the liquid or gas when it is heated. By the above-described configuration, for example, in a situation in which the temperature in the battery module 110 rises to 70°C to 100°C above or flames or high temperature venting gas causes thermal damage to the glass bulb, the material in the glass bulb may expand, the glass bulb may rupture and the outlet of the spray nozzle 118b may be open. Then, the jet of fire fighting water in the unit body 118a may be emitted toward the cell stack through the outlet of the spray nozzle 118b.

Unlike this embodiment, outside of the rear plate 115, one end of the feed valve 117 may be connected to the connection nozzle 132 of the fire fighting water supply pipe 130, and inside of the rear plate 115, the other end of the feed valve 117, that is, the outlet to which the glass bulb is coupled may be disposed. In this case, the fire extinguishing unit 118 may be omitted from the inside of the module housing 112.

By the above-described method of feeding the fire fighting water, the fire fighting water may be only fed into the battery module 110 in which the thermal event occurred among each battery module 110 included in the battery rack 100.

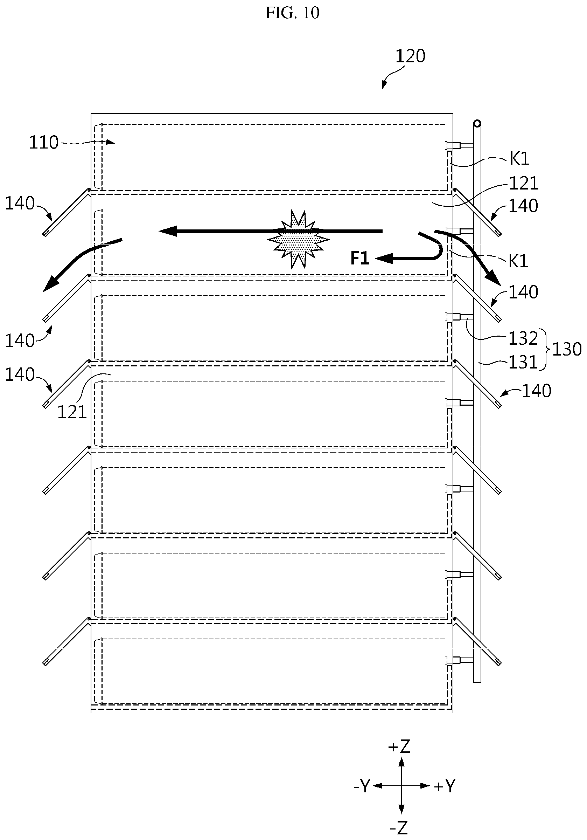

With the battery rack 100 according to an embodiment of the present disclosure, the drainage mechanism of the fire fighting water after feeding the fire fighting water when a thermal event occurs in the battery module 110 will be described with reference to FIG. 10 below.

For example, when a thermal event occurs in the second battery module 110 from the top among the battery modules 110 included in the battery rack 100 shown in FIG. 10, the outlet of the spray nozzle 118b in the second battery module 110 is open. Then, by a pressure difference, the fire fighting water enters the battery module 110 through the feed valve 117 of the second battery module 110 from the supply pipe, moves along the unit body 118a and exits through the outlet of each spray nozzle.

As described above, when the fire fighting water is directly fed into the second battery module 110 in which the thermal event occurs among the plurality of battery modules 110, it may be possible to suppress the fire situation or thermal runaway situation in the second battery module 110 more rapidly and effectively at the early stage. As a result, it may be possible to prevent thermal runaway or flame propagation to the other battery modules 110, and moreover, to prevent damage to the entire energy storage system 200 including the battery rack 200.

Meanwhile, the module housing 112 of the battery module 110 does not have a completely airtight structure. That is, the module housing 112 may have a gap due to the air conditioning hole 116 or the cooling fan 114 and an assembly clearance. Accordingly, the fire fighting water fed into the battery module 110 may leak out of the battery module 110 due to the above-described factors. When the fire fighting water leaking out of the battery module 110 flows into the other normal battery modules 110, it may cause serious flood damage to the corresponding battery modules 110.

As described above, the battery rack 100 according to the present disclosure may be configured to receive each battery module 110 in the receiving portions 121 having a structure in which the upper and lower sides and the left and right sides are closed except the front and rear sides, in order to prevent flood damage to the other normal battery module 110. For example, when leakage of the fire fighting water occur in the second battery module 110, the fire fighting water is only drained in the frontward direction and the rearward direction of the rack case 120 as shown in FIG. 10. Accordingly, the risk of flood damage of the other normal battery modules 110 is very low.

Moreover, when the fire fighting water is drained out of the receiving portion 121 in which the second battery module 110 is present, the flow of the fire fighting water may be guided further outwards along the drain guide unit 140 to cause the fire fighting water to be dropped down to the location spaced the predetermined distance apart from the front outer surface or the rear outer surface of the rack case 120. Additionally, the drain guide units 140 are vertically disposed in multistep arrangement along the heightwise direction of the rack case 120, and the drain guide units 140 disposed at lower positions protect each battery module 110 from the fire fighting water falling down from the height of the second battery module 110, thereby further reducing the flood damage risk of the other normal battery modules 110 below the second battery module 110.

Additionally, since the rack case 120 of this embodiment has the wall protruding from the bottom surface of each receiving portion 121 at the rear open end of each receiving portion 121, inside the receiving portion 121, the fire fighting water may be blocked by the wall and move to the front side of the receiving portion 121 as indicated by 'F1' in FIG. 10. Accordingly, most of the fire fighting water may be drained in the frontward direction of the rack case 120.

As described above, the battery rack 100 according to the present disclosure may prevent the fire fighting water fed into the battery module 110 in which the thermal event occurred from entering the other adjacent battery modules 110.

Meanwhile, the energy storage system 200 according to the present disclosure may include at least one battery rack 100 described above.

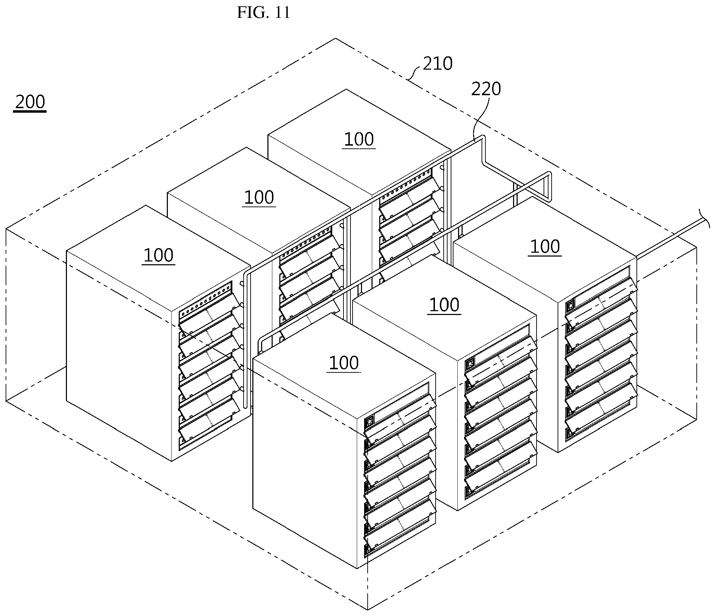

For example, as shown in FIG. 11, the energy storage system 200 may include a plurality of battery racks 100, a container 210 accommodating the plurality of battery racks 100 and a connection pipe 220 connected to the fire fighting water supply pipe 130 of each battery rack 100.

Although not shown in the drawing for convenience of description, the energy storage system 200 may further include an air conditioning device to manage the temperature in the container 210, a Master Battery Management System to control all the battery racks 100 or the like.

## Claims

1. A battery rack (100), comprising:
a plurality of battery modules (110);
a rack case (120) having receiving portions (121), each configured to insert and receive each of the plurality of battery modules (110) at each predetermined height, and having a structure in which upper and lower sides and left and right sides are closed except front and rear sides;
a fire fighting water supply pipe (130) connected to each of the battery modules (110) received in the receiving portions (121) to supply a fire fighting water when a fire occurs; and
a drain guide unit (140) disposed on at least one surface of a front outer surface or a rear outer surface of the rack case (120), and configured to guide drainage of the fire fighting water to cause the fire fighting water coming out of the battery module (110) after having been fed into the battery module (110) to be dropped down to a location spaced a predetermined distance apart from the outer surface of the rack case (120),
wherein the drain guide unit (140) protrudes from the outer surface of the rack case (120) so that a predetermined angle is formed between a plate surface of the drain guide unit (140) and the outer surface of the rack case (120),
**characterized in that** the drain guide unit (140) is rotatably coupled to the outer surface of the rack case (120).

2. The battery rack (100) according to claim 1, wherein the drain guide unit (140) is coupled to the outer surface of the rack case (120) at a location which is lower than an upper battery module of every two battery modules vertically adjacent to each other and higher than a lower battery module.

3. The battery rack (100) according to claim 1, wherein the drain guide unit (140) is configured to cover the receiving portion (121) located on the drain guide unit (140) when it is rotated upwards.

4. The battery rack (100) according to claim 1, wherein the drain guide unit (140) is configured to open the receiving portion (121) located on the drain guide unit (140) when it is rotated downwards.

5. The battery rack (100) according to claim 1, wherein the drain guide unit (140) includes:
a drain guide plate (141) of a plate shape hinged to the outer surface of the rack case (120); and
a stopper (142) configured to limit rotation of the drain guide plate (141) so that the drain guide plate (140) is at a preset angle with respect to the outer surface of the rack case (120).

6. The battery rack (100) according to claim 5, wherein the stopper (142) is in a shape of a protrusion which protrudes from an edge area of the drain guide plate (141) close to a rotation axis so as to come in contact with the outer surface of the rack case (120) at the preset angle.

7. The battery rack (100) according to claim 5, wherein the drain guide unit (140) further includes a magnet (144) at an edge area opposite a rotation axis of the drain guide plate (141), to allow the drain guide plate (141) rotated upwards to be fixed in parallel to the outer surface of the rack case (120).

8. The battery rack (100) according to claim 1, wherein the drain guide unit (140) includes:
a first drain guide unit (140A) disposed on a front outer surface of the rack case (120); and
a second drain guide unit (140B) disposed on a rear outer surface of the rack case (120).

9. The battery rack (100) according to claim 8, wherein in the rack case (120), the receiving portion (121) has a narrower horizontal width of a rear open end than a front open side, and
wherein the fire fighting water supply pipe (130) is connected to each battery module (110) through the rear outer surface of the rack case (120).

10. The battery rack (100) according to claim 8, wherein the first drain guide unit (140A) is provided in a size to cover a front open end of each receiving portion (121), and
wherein the second drain guide unit (140B) is provided in a size to cover a rear open end of each receiving portion (121).

11. The battery rack (100) according to claim 9, wherein the battery module (110) includes a fan (114) in a front surface of a module housing (112) and an air conditioning hole (116) in a rear surface of the module housing (112), and is inserted into the receiving portion (121) through the rear open end of the receiving portion (121) such that the air conditioning hole (116) is exposed.

12. The battery rack (100) according to claim 11, wherein when the battery module (110) is inserted into the receiving portion (121), a portion of the rear surface of the module housing (112) below the air conditioning hole (116) is closed by the rear outer surface of the rack case (120).

13. An energy storage system comprising the battery rack (100) according to any one of claims 1 to 12.

## Patentansprüche

1. Batteriegestell (100), umfassend:
eine Vielzahl von Batteriemodulen (110);
ein Gestellgehäuse (120) mit Aufnahmeabschnitten (121), die jeweils so konfiguriert sind, dass sie jedes der Vielzahl von Batteriemodulen (110) in jeder vorbestimmten Höhe einsetzen und aufnehmen, und mit einer Struktur, bei der die obere und die untere Seite sowie die linke und die rechte Seite mit Ausnahme der vorderen und der hinteren Seite geschlossen sind;
ein Löschwasserversorgungsrohr (130), das mit jedem der in den Aufnahmeabschnitten (121) aufgenommenen Batteriemodule (110) verbunden ist, um im Brandfall Löschwasser zuzuführen; und
eine Ablaufführungseinheit (140), die auf mindestens einer Fläche einer vorderen Außenfläche oder einer hinteren Außenfläche des Gestellgehäuses (120) angeordnet und so konfiguriert ist, dass sie den Ablauf des Löschwassers so leitet, dass das aus dem Batteriemodul (110) austretende Löschwasser, nachdem es in das Batteriemodul (110) eingespeist wurde, an eine Stelle fällt, die in einem vorbestimmten Abstand von der Außenfläche des Gestellgehäuses (120) beabstandet ist,
wobei die Ablaufführungseinheit (140) von der Außenfläche des Gestellgehäuses (120) so vorsteht, dass ein vorbestimmter Winkel zwischen einer Plattenfläche der Ablaufführungseinheit (140) und der Außenfläche des Gestellgehäuses (120) gebildet wird,
**dadurch gekennzeichnet, dass** die Ablaufführungseinheit (140) drehbar mit der Außenfläche des Gestellgehäuses (120) gekoppelt ist.

2. Batteriegestell (100) nach Anspruch 1, wobei die Ablaufführungseinheit (140) mit der Außenfläche des Gestellgehäuses (120) an einer Stelle gekoppelt ist, die niedriger als ein oberes Batteriemodul von jeweils zwei vertikal benachbarten Batteriemodulen und höher als ein unteres Batteriemodul ist.

3. Batteriegestell (100) nach Anspruch 1, wobei die Ablaufführungseinheit (140) so konfiguriert ist, dass sie den auf der Ablaufführungseinheit (140) befindlichen Aufnahmeabschnitt (121) abdeckt, wenn sie nach oben gedreht wird.

4. Batteriegestell (100) nach Anspruch 1, wobei die Ablaufführungseinheit (140) so konfiguriert ist, dass sie den auf der Ablaufführungseinheit (140) befindlichen Aufnahmeabschnitt (121) öffnet, wenn sie nach unten gedreht wird.

5. Batteriegestell (100) nach Anspruch 1, wobei die Ablaufführungseinheit (140) enthält:
eine Ablaufführungsplatte (141) in Plattenform, die gelenkig an der Außenfläche des Gestellgehäuses (120) angebracht ist; und
einen Anschlag (142), der so konfiguriert ist, dass er die Drehung der Ablaufführungsplatte (141) begrenzt, so dass sich die Ablaufführungsplatte (141) in einem voreingestellten Winkel bezüglich der Außenfläche des Gestellgehäuses (120) befindet.

6. Batteriegestell (100) nach Anspruch 5, wobei der Anschlag (142) die Form eines Vorsprungs hat, der von einem Kantenbereich der Ablaufführungsplatte (141) nahe einer Drehachse vorsteht, um mit der Außenfläche des Gestellgehäuses (120) im voreingestellten Winkel in Kontakt zu kommen.

7. Batteriegestell (100) nach Anspruch 5, wobei die Ablaufführungseinheit (140) ferner einen Magneten (144) an einem Kantenbereich gegenüber einer Drehachse der Ablaufführungsplatte (141) enthält, um zu ermöglichen, dass die nach oben gedrehte Ablaufführungsplatte (141) parallel zur Außenfläche des Gestellgehäuses (120) befestigt wird.

8. Batteriegestell (100) nach Anspruch 1, wobei die Ablaufführungseinheit (140) enthält:
eine erste Ablaufführungseinheit (140A), die auf einer vorderen Außenfläche des Gestellgehäuses (120) angeordnet ist; und
eine zweite Ablaufführungseinheit (140B), die auf einer hinteren Außenfläche des Gestellgehäuses (120) angeordnet ist.

9. Batteriegestell (100) nach Anspruch 8, wobei im Gestellgehäuse (120) der Aufnahmeabschnitt (121) eine geringere horizontale Breite eines hinteren offenen Endes als eine vordere offene Seite aufweist, und
wobei das Löschwasserversorgungsrohr (130) mit jedem Batteriemodul (110) durch die hintere Außenfläche des Gestellgehäuses (120) verbunden ist.

10. Batteriegestell (100) nach Anspruch 8, wobei die erste Ablaufführungseinheit (140A) in einer Größe vorgesehen ist, um ein vorderes offenes Ende jedes Aufnahmeabschnitts (121) abzudecken, und
wobei die zweite Ablaufführungseinheit (140B) in einer Größe vorgesehen ist, um ein hinteres offenes Ende jedes Aufnahmeabschnitts (121) abzudecken.

11. Batteriegestell (100) nach Anspruch 9, wobei das Batteriemodul (110) einen Lüfter (114) in einer vorderen Fläche eines Modulgehäuses (112) und ein Klimatisierungsloch (116) in einer hinteren Fläche des Modulgehäuses (112) enthält und in den Aufnahmeabschnitt (121) durch das hintere offene Ende des Aufnahmeabschnitts (121) so eingesetzt wird, dass das Klimatisierungsloch (116) freiliegt.

12. Batteriegestell (100) nach Anspruch 11, wobei, wenn das Batteriemodul (110) in den Aufnahmeabschnitt (121) eingesetzt wird, ein Abschnitt der hinteren Fläche des Modulgehäuses (112) unterhalb des Klimatisierungslochs (116) durch die hintere Außenfläche des Gestellgehäuses (120) geschlossen wird.

13. Energiespeichersystem, umfassend das Batteriegestell (100) nach einem der Ansprüche 1 bis 12.

## Revendications

1. Baie de batterie (100), comprenant :
une pluralité de modules de batterie (110) ;
un boîtier de baie (120) ayant des parties de réception (121), chacune configurée pour insérer et recevoir chacun de la pluralité de modules de batterie (110) à chaque hauteur prédéterminée, et ayant une structure dans laquelle les côtés supérieur et inférieur et les côtés gauche et droit sont fermés à l'exception des côtés avant et arrière ;
un tuyau d'alimentation en eau d'extinction d'incendie (130) connecté à chacun des modules de batterie (110) reçus dans les parties de réception (121) pour fournir de l'eau d'extinction d'incendie lorsqu'un incendie se déclare ; et
une unité de guidage de drainage (140) disposée sur au moins une surface d'une surface extérieure avant ou d'une surface extérieure arrière du boîtier de baie (120), et configurée pour guider le drainage de l'eau d'extinction d'incendie pour amener l'eau d'extinction d'incendie sortant du module de batterie (110) après avoir été introduite dans le module de batterie (110) à tomber à un emplacement espacé d'une distance prédéterminée de la surface extérieure du boîtier de baie (120),
dans lequel l'unité de guidage de drainage (140) fait saillie de la surface extérieure du boîtier de baie (120) de sorte qu'un angle prédéterminé soit formé entre une surface de plaque de l'unité de guidage de drainage (140) et la surface extérieure du boîtier de baie (120),
**caractérisé en ce que** l'unité de guidage de drainage (140) est accouplée de manière rotative à la surface extérieure du boîtier de baie (120).

2. Baie de batterie (100) selon la revendication 1, dans lequel l'unité de guidage de drainage (140) est accouplée à la surface extérieure du boîtier de baie (120) à un emplacement qui est plus bas qu'un module de batterie supérieur de deux modules de batterie verticalement adjacents l'un à l'autre et plus haut qu'un module de batterie inférieur.

3. Baie de batterie (100) selon la revendication 1, dans lequel l'unité de guidage de drainage (140) est configurée pour couvrir la partie de réception (121) située sur l'unité de guidage de drainage (140) lorsqu'elle est tournée vers le haut.

4. Baie de batterie (100) selon la revendication 1, dans lequel l'unité de guidage de drainage (140) est configurée pour ouvrir la partie de réception (121) située sur l'unité de guidage de drainage (140) lorsqu'elle est tournée vers le bas.

5. Baie de batterie (100) selon la revendication 1, dans lequel l'unité de guidage de drainage (140) inclut :
une plaque de guidage de drainage (141) en forme de plaque articulée sur la surface extérieure du boîtier de baie (120) ; et
une butée (142) configurée pour limiter la rotation de la plaque de guidage de drainage (141) de sorte que la plaque de guidage de drainage (141) soit à un angle prédéfini par rapport à la surface extérieure du boîtier de baie (120).

6. Baie de batterie (100) selon la revendication 5, dans lequel la butée (142) a la forme d'une protubérance qui fait saillie d'une zone de bord de la plaque de guidage de drainage (141) à proximité d'un axe de rotation de manière à venir en contact avec la surface extérieure du boîtier de baie (120) à l'angle prédéfini.

7. Baie de batterie (100) selon la revendication 5, dans lequel l'unité de guidage de drainage (140) inclut en outre un aimant (144) au niveau d'une zone de bord opposée à un axe de rotation de la plaque de guidage de drainage (141), pour permettre à la plaque de guidage de drainage (141) tournée vers le haut d'être fixée parallèlement à la surface extérieure du boîtier de baie (120).

8. Baie de batterie (100) selon la revendication 1, dans lequel l'unité de guidage de drainage (140) inclut :
une première unité de guidage de drainage (140A) disposée sur une surface extérieure avant du boîtier de baie (120) ; et
une seconde unité de guidage de drainage (140B) disposée sur une surface extérieure arrière du boîtier de baie (120).

9. Baie de batterie (100) selon la revendication 8, dans lequel, dans le boîtier de baie (120), la partie de réception (121) a une largeur horizontale plus étroite à une extrémité ouverte arrière qu'à un côté ouvert avant, et
dans lequel le tuyau d'alimentation en eau d'extinction d'incendie (130) est connecté à chaque module de batterie (110) à travers la surface extérieure arrière du boîtier de baie (120).

10. Baie de batterie (100) selon la revendication 8, dans lequel la première unité de guidage de drainage (140A) est prévue dans une taille pour couvrir une extrémité ouverte avant de chaque partie de réception (121), et
dans lequel la seconde unité de guidage de drainage (140B) est prévue dans une taille pour couvrir une extrémité ouverte arrière de chaque partie de réception (121).

11. Baie de batterie (100) selon la revendication 9, dans lequel le module de batterie (110) inclut un ventilateur (114) dans une surface avant d'un boîtier de module (112) et un trou de climatisation (116) dans une surface arrière du boîtier de module (112), et est inséré dans la partie de réception (121) à travers l'extrémité ouverte arrière de la partie de réception (121) de telle sorte que le trou de climatisation (116) est exposé.

12. Baie de batterie (100) selon la revendication 11, dans lequel, lorsque le module de batterie (110) est inséré dans la partie de réception (121), une partie de la surface arrière du boîtier de module (112) en dessous du trou de climatisation (116) est fermée par la surface extérieure arrière du boîtier de baie (120).

13. Système de stockage d'énergie comprenant le baie de batterie (100) selon l'une quelconque des revendications 1 à 12.
